# EUROPÄISCHE PATENTSCHRIFT

(11) **EP 1 281 552 B1**
(45) Veröffentlichungstag und Bekanntmachung des Hinweises auf die Patenterteilung: **06.09.2006**
(21) Anmeldenummer: 02012865.8
(22) Anmeldetag: 11.06.2002
(51) Int. Cl.: B60J 7/20

(54) **Kraftwagen mit zu öffnendem Klappdach**
Vehicle with an openable folding roof
Véhicule avec un toit escamotable

(30) Priorität: 31.07.2001 DE 10137048
(43) Veröffentlichungstag der Anmeldung: 05.02.2003
(73) Patentinhaber: DaimlerChrysler AG, 70567 Stuttgart (DE)
(72) Erfinder: Fölster, Thomas, Dr., 71120 Grafenau (DE); Schrader, Jürgen, 71093 Weil im Schönbuch (DE); Wesenick, Reiner, 89129 Langenau (DE)

(56) Entgegenhaltungen:
- DE-A- 19 706 418
- DE-C- 19 541 168
- DE-C- 19 542 906
- DE-C- 19 636 027
- PATENT ABSTRACTS OF JAPAN vol. 013, no. 497 (M-889), 9. November 1989 (1989-11-09) & JP 01 197117 A (MAZDA MOTOR CORP), 8. August 1989 (1989-08-08)

## Beschreibung

Die Erfindung betrifft einen Kraftwagen mit zu öffnendem Klappdach nach dem Oberbegriff des Patentanspruchs 1.

Der DE 198 45 154 C2 ist bereits ein solcher Kraftwagen mit einem zu öffnenden und in einem Heckstauraum versenkbaren Klappdach als bekannt zu entnehmen. Weiter ist dort eine Unterteilung des Heckstauraums in einen Verdeckraum und einen Restkofferraum durch eine Trennanordnung vorgesehen, die ein formstabiles ebenes Abdeckelement umfasst. Dieses Abdeckelement ist aus einer Gebrauchsstellung bei abgelegtem Verdeck in eine Nichtgebrauchsstellung höhenverlagerbar.

Der Erfindung liegt die Aufgabe zugrunde, einen Kraftwagen der eingangs genannten Art zu schaffen, bei dem eine verbesserte Be- und Entlademöglichkeit des Restkofferraums gegeben ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist das sich in Fahrzeuglängsrichtung gesehen über eine hintere Teillänge der Trennanordnung erstreckende Abdeckelement unter Längenverkürzung der Trennanordnung nach vorne in die Nichtgebrauchsstellung verschiebbar, so dass dich zum Be- und Entladen des Restkofferraums auf vorteilhafte Weise eine größere Ladeöffnung ergibt.

Um eine besonders gute Raumausnutzung für den Restkofferraum zu erreichen, ist das Abdeckelement in vorteilhafter Ausgestaltung der Erfindung als Abdeckhaube mit seitlich nach unten abgewinkelten Flügeln ausgebildet.

Zur Verlagerung der Abdeckhaube nach vorne oben hat sich ein jeweils seitlich angeordnetes Parallelogrammgestänge bewährt, wobei der Verschiebeweg durch die Wahl der Länge der Parallelogrammhebel auf einfache Weise beeinflusst werden kann.

Durch ein zweites Abdeckelement aus einer faltbaren Stoffbahn kann die Längenverkürzung der Trennanordnung auf einfache Art ausgeglichen werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine schematische Schnittansicht auf das geschlossene Klappdach entlang der Mittenlängsebene des erfindungsgemäßen Kraftwagens mit dem gelenkig miteinander verbundenen Front- und Heckdachteil sowie der Hauptlenkeranordnung zum Öffnen des Daches;
- Fig.2 und 3: jeweils eine schematische Schnittansicht auf das Festdach während einer ersten und zweiten Stufe des Ablegevorgangs des Dachs in einem Heckstauraum;
- Fig.4: eine schematische Schnittansicht auf das Klappdach in abgelegtem Zustand;
- Fig.5: eine schematische Perspektivansicht auf den durch eine Trennanordnung in einen Verdeckraum und einen Restkofferraum unterteilten Heckstauraum, wobei die Trennanordnung in einer Gebrauchsstellung bei abgelegtem Verdeck gezeigt ist;
- Fig.6: eine schematische Perspektivansicht auf die Trennanordnung in einer Nichtgebrauchsstellung mit einer nach vorne verschobenen hinteren Abdeckhaube;
- Fig.7: eine vergrößerte schematische Perspektivansicht auf den hinteren rechten Eckbereichen der Abdeckhaube; und in
- Fig.8 und 9: jeweils schematische Schnittansichten auf den Heckstauraum entlang der Mittenlängsebene des erfindungsgemäßen Kraftwagens.

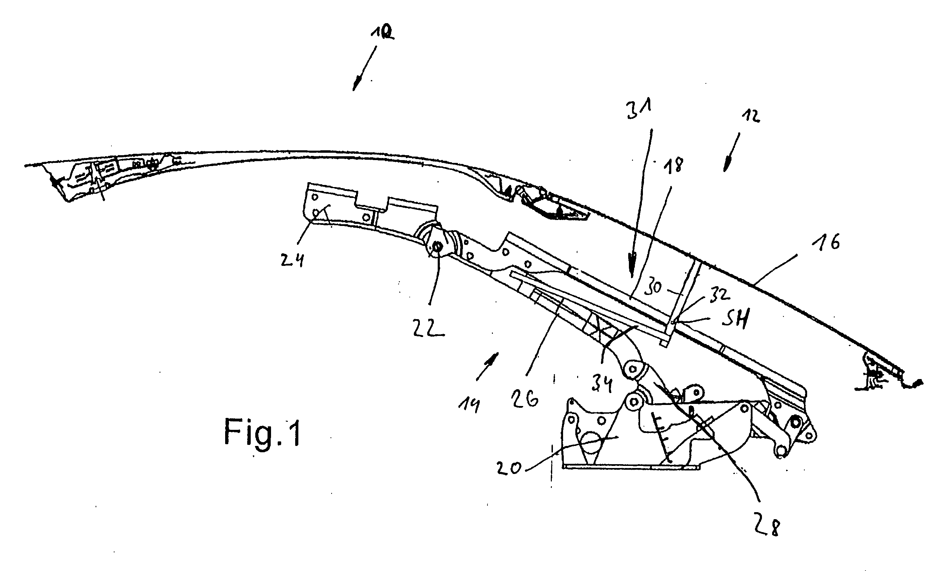

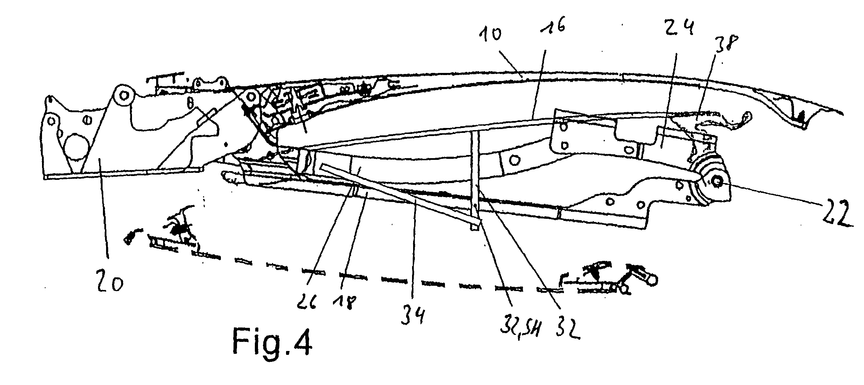

In Fig.1 ist in schematische Schnittansicht entlang der Mittenlängsebene das zu öffnende Klappdach eines Kraftwagens in geschlossenem Zustand dargestellt. Das Festdach umfasst ein gelenkig miteinander verbundenes Front- und Heckdachteil 10,12, wobei sich das Frontdachteil 10 vorderseitig an einen nicht gezeigten Windschutzscheibenrahmen anschließt und das Heckdachteil 12 rückseitig auf Höhe der Bordwand des Kraftwagens endet. Das Front- und Heckdachteil 10,12, sind unter Steuerung durch eine im weiteren noch näher erläuterte Hauptlenkeranordnung 14 zwischen der hier gezeigten Schließund einer in Fig. 4 gezeigten Ablagestellung in einem Heckstauraum verlagerbar. Das Heckdachteil 12 umfasst als wesentliche Teile eine feste Heckscheibe 16 aus Glas oder Kunststoff und seitliche C-Säulen 18, wobei die Heckscheibe 16 um eine in deren Mittelbereich in Fahrzeugquerrichtung verlaufende Schwenkachse SH auf im weiteren noch beschriebene Weise an den seitlichen Dachsäulen 16 schwenkbar gelagert ist. Am hinteren Ende sind die seitlichen C-Säulen 16 jeweils gelenkig an einem Hauptlager 20 angebunden, während sie an ihren vorderen Enden jeweils einen Hauptdrehpunkt 22 aufweisen, an dem auch ein Scharnier 24 für das Frontdachteil 10 angelenkt ist. An dem von dem Hauptdrehpunkt 22 abgewandten Ende des Scharniers 24 ist ein in Fig.1 verdecktes Ende eines Hauptlenkers 26 der Hauptlenkeranordnung 14 angelenkt, dessen anderes Ende über einen Zwischenhebel 28 mit dem Hauptlager 20 verbunden ist. Die beiden Hauptlenker 26 verlaufen seitlich nahe der C- Säulen. Die Heckscheibe 16 ist fest mit einem Hebel 30 eines Drehantriebs 31 starr verbunden, der im mittleren Bereich der Heckscheibe 16 in Richtung nach innen absteht und über einen Drehpunkt 32 jeweils gelenkig mit der C-Säule 18 schwenkbar verbunden ist. Der Hebel 30 ist an seinem dem Drehpunkt 32 zugewandten Ende fest mit einem Zwangsführungshebel 34 verbunden, der wiederum mit seinem von dem Hebel 30 abgewandten Ende an den dazugehörigen Hauptlenker 26 angelenkt ist.

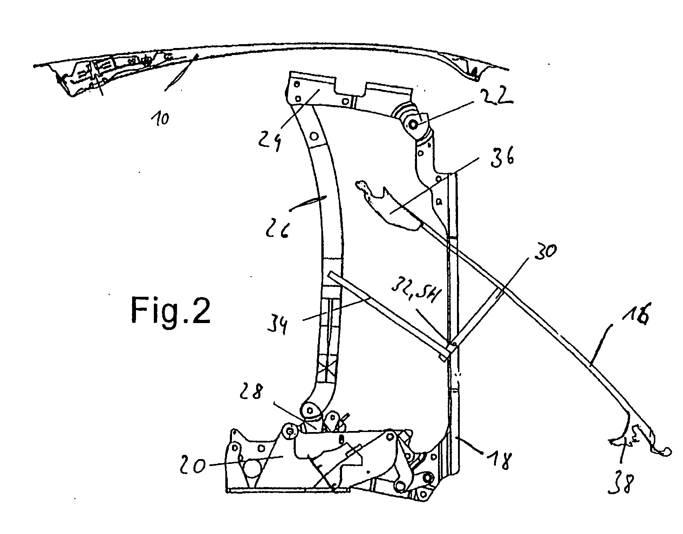

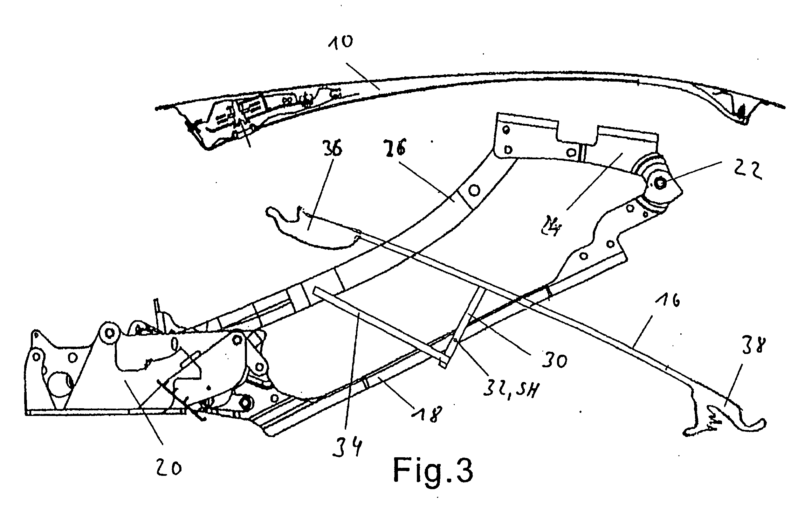

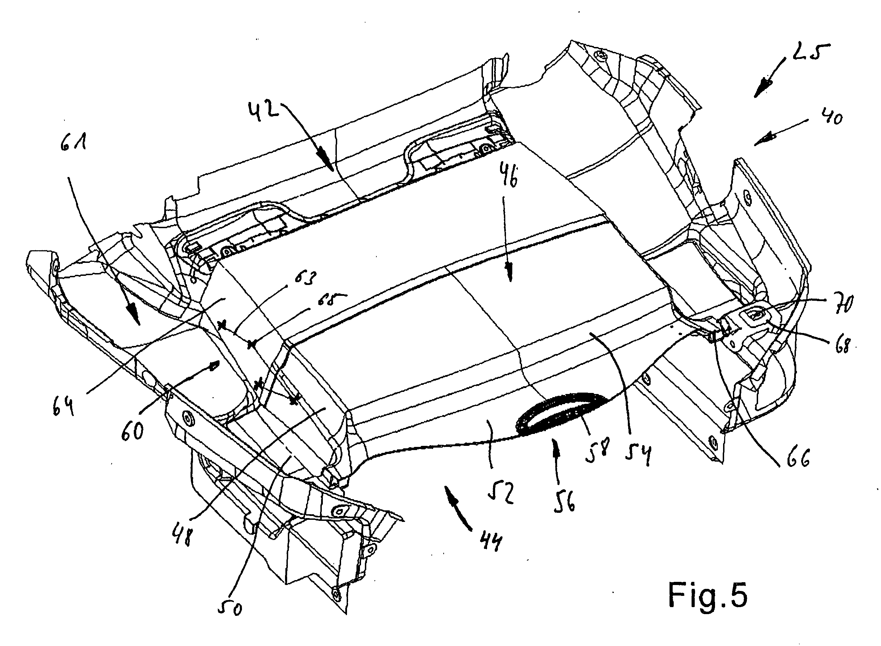

Aus den Fig. 2 bis 4 sind jeweils in schematischer Schnittansicht drei Stufen des Ablegvorgangs des Dachs in dem in den Figuren 5 bis 9 gezeigten Heckstauraum 25 ersichtlich. Mit Antrieb des Hauptlenkers 26 über den Zwischenhebel 28 von einer nicht näher dargestellten Antriebseinrichtung aus wird über die Zwangsführungshebel 34 und die Hebel 32 des Drehantriebs 31 gleichzeitig auch zwangsgeführt die Heckscheibe 16 bewegt. Aufgrund der vorstehend beschriebenen Anordnung der Hebel und Gelenkpunkte wird die Heckscheibe 16 mittels des Drehantriebs 31 separat von den C-Säulen 18 abgelegt, wobei die Ablegbewegung dabei zwangsgeführt so erfolgt, dass die Heckscheibe 16 keine Drehbewegung nach hinten, sondern lediglich eine Schwenkbewegung um die in Fahrzeugquerrichtung verlaufende Schwenkachse SH im Mittelbereich der Heckscheibe 16 nach unten und hinten durchführt, wobei die Heckscheibe 16 grundsätzlich ihre Lagerichtung beibehält. Mit anderen Worten: eine vordere bzw. obere Dichtung 36 verbleibt vorne und eine hintere Dichtung 38 verbleibt hinten.

Wie aus der Fig. 4 ersichtlich ist, liegen damit in abgelegtem Zustand das Frontdachteil 10 und die Heckscheibe 16 raumsparend in gleichem Sinne gekrümmt bzw. mit der gleichen Wölbung im Heckbereich des Fahrzeuges. In Fig. 4 ist teilweise gestrichelt zusätzlich eine Heckscheibe in einer Lage eingezeichnet, die sie bei einer Bewegung nach Stand der Technik hätte.

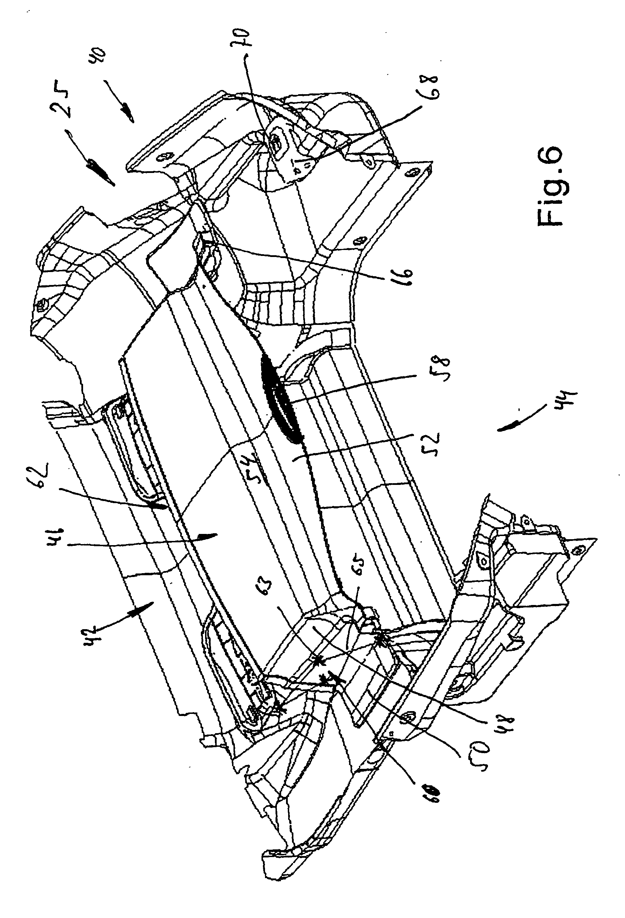

In den Figuren 5 und 6 ist in schematischer Perspektivansicht die Innenverkleidung des Heckstauraums 25 des Kraftwagens mit einer darin angeordneten Trennanordnung 40 gezeigt, welche in Fig.5 in ihrer Gebrauchsstellung und in Fig.6 in ihrer Nichtgebrauchsstellung dargestellt ist. Gemäß Fig.5 unterteilt die Trennanordnung 40 den Heckstauraum 25 in einen Verdeckraum 42 und einen Restkofferraum 44. Die Trennanordnung 40 umfasst ein formstabiles Abdeckelement in Form einer Abdeckhaube 46, welche hier aus einem Kunststoff besteht und seitlich nach unten abgewinkelte, in Fahrzeuglängsrichtung verlaufende Flügel 48 aufweist. Mit anderen Worten ist die Abdeckhaube 46 zur Vergrößerung des Restkofferraums 44 in gleichem Sinne gewölbt wie die Heckscheibe 16 bzw. das Frontdachteil 10. Alternativ wäre auch eine ebene Ausgestaltung der Abdeckhaube 46 denkbar. Die Abdeckhaube 46 erstreckt sich über eine hintere Teillänge der Trennanordnung 40, welche hier etwa der halben Länge des Heckstauraums 25 entspricht. Am unteren Ende der Flügel 48 sind seitlich abkragende Abschnitte 50 angeordnet. Zum hinteren Endbereich 52 hin weist die Abdeckhaube 46 einen Übergangsbereich 54 auf, der nach unten abgewinkelt ist. Der Endbereich 52 und die seitlich abkragenden Abschnitte 50 liegen dabei etwa auf einer Höhe. Der hintere Endbereich 52 verläuft etwa horizontal und ist hier von einer mittig angeordneten Griffanordnung 56 durchsetzt, die ein ovales Griffloch umfasst. Dabei ist die an das Griffloch 56 angrenzende Randzone des Endbereichs 52 mit einer Umrandung 58 aus Kunststoff versehen.
Die Abdeckhaube 46 ist über zwei jeweils seitlich angeordnete Parallelogrammgestänge 60 bewegungsgesteuert, von denen in den Figuren 5 und 6 lediglich die Lagerstellen 63 sowie die Parallelogrammhebel 65 schematisch erkennbar sind. Die Parallelogrammgestänge 60 sind dabei an der Auskleidung des Heckstauraums 25 befestigt. Über die Parallelogrammgestänge 60 ist die Abdeckhaube 46 unter Längenverkürzung der Trennanordnung 40 aus der in Fig.5 gezeigten Gebrauchsstellung in die in Fig.6 gezeigte Nichtgebrauchsstellung in Richtung nach vorne höhenverlagerbar.

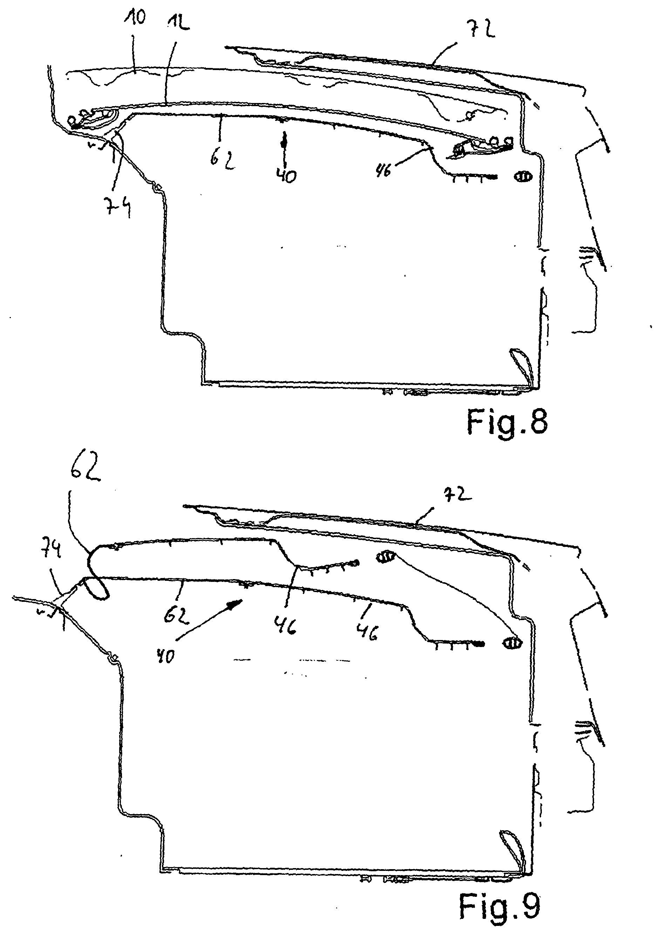

Im vorderen Längenbereich weist die Trennanordnung 40 ein zweites Abdeckelement 62 auf, welches hier aus einer faltbaren Stoffbahn besteht. Alternativ wäre auch eine formstabile Gestaltung des Abdeckelements 62 denkbar. Dabei ist das vordere Ende des hinteren Abdeckelements 46 mit dem hinteren Ende des zweiten Abdeckelements 62 verbunden. Das vordere Ende der Stoffbahn 62 ist - wie unter Bezugnahme auf Fig.9 noch näher erläutert werden wird - an der Innenauskleidung des Heckstauraums 25 befestigt. Das zweite Abdeckelement 62 umfasst seitlich nach unten abgewinkelte Flügel 64, die auf die Flügel 48 des hinteren Abdeckelements 46 abgestimmt sind. Mit anderen Worten ist das zweite Abdeckelement 62 in seinem Querschnitt etwa an den der Abdeckhaube 46 angepasst. Die Flügel 48 der Abdeckhaube 46 und die Flügel 64 des Abdeckelements 62 bilden jeweils gemeinsam mit gegenüberliegenden Wandbereichen einer Auskleidung des Heckstauraums einen Aufnahmeschacht 61 für die seitlichen Verdecksäulen 18 des Klappdachs. Die Trennanordnung 40 kann gemeinsam mit Verkleidungsteilen des Heckstauraums 25 als vormontierbare Baueinheit ausgebildet sein.

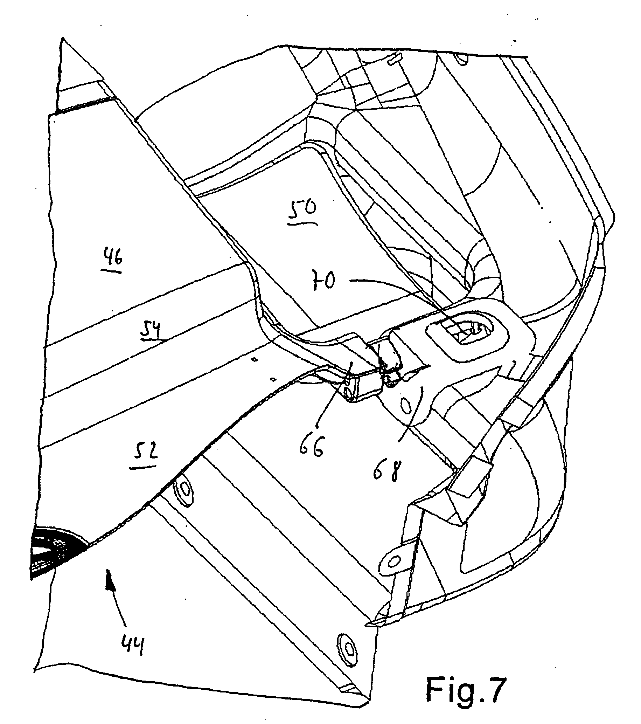

Wie insbesondere in Zusammenschau mit Fig.7 erkennbar, in der eine vergrößerte schematische Perspektivansicht auf den hinteren rechten Eckbereich der Abdeckhaube 46 gezeigt ist, stehen in den hinteren Eckbereichen von der Abdeckhaube 46 seitlich auskragende Haltearme 66 ab, die in zugehörige Aufnahmekonsolen 68 einhängbar sind. Hiermit wird die Abdeckhaube 46 in der Gebrauchsstellung fixiert. Die Aufnahmekonsolen 68 weisen zudem jeweils einen Anschlagpuffer 70 für das Klappdach auf. An den Parallelogrammgestängen 60 kann ein Federspeicher oder dgl. angeordnet sein, so dass die Abdeckhaube 46 gegen die Federkraft dieses Speichers in den Aufnahmekonsolen 68 gehalten ist.
In den Figuren 8 und 9 ist entlang der Mittenlängsebene des erfindungsgemäßen Kraftwagens jeweils eine schematische Schnittansicht auf den Heckstauraum 25 gezeigt, welcher oben von einem Heckraumdeckel 72 verschlossen ist. In Fig.8 ist in abgelegtem Zustand das Frontdachteil 10 und die zwischen den Dachsäulen 16 angeordnete Heckscheibe 16 raumsparend in gleichem Sinne gekrümmt unterhalb des Heckraumdeckels 72 verstaut, wobei die Trennanordnung 40 mit dem vorderen Abdeckelement 62 und der hinteren Abdeckhaube 46 in der Gebrauchsstellung gezeigt ist. Es ist zudem erkennbar, dass das vordere Abdeckelement 62 mit seinem vorderen Ende an einem Auskleidungsteil 74 des Heckstauraums 25 befestigt ist. In Fig.9 ist die Trennanordnung 40 mit dem vorderen Abdeckelement 62 und der hinteren Abdeckhaube 46 sowohl in der Gebrauchsstellung als auch in der Nichtgebrauchsstellung gezeigt, in welcher die Abdeckhaube 46 unter Längenverkürzung der Trennanordnung 40 in Richtung nach vorne oben höhenverlagert ist. Beim Zurückbewegen der Abdeckhaube 46 in die Nichtgebrauchsstellung wird das Abdeckelement 62 in Form einer Stoffbahn aus seinem gespannten Zustand in einen gefalteten Zustand überführt. Das Abdeckelement 62 kann auch formsteif ausgebildet sein, wobei dieses dann am seinem vorderen Ende nicht fest mit der Abdeckhaube 46 verbunden ist. Die Abdeckhaube 46 wird dann über das Abdeckelement 62 in die Nichtgebrauchsstellung geschwenkt.

## Patentansprüche

1. Kraftwagen mit einem zu öffnenden Klappdach, das in einem Heckstauraum (25) versenkbar ist, und mit einer Unterteilung des Heckstauraums (25) in einen Verdeckraum (42) und einen Restkofferraum (44) durch eine Trennanordnung (40), die ein formstabiles Abdeckelement (46) umfasst, welches aus einer Gebrauchsstellung bei abgelegtem Verdeck in eine Nichtgebrauchsstellung höhenverlagerbar ist,
**dadurch gekennzeichnet,**
**dass** sich das Abdeckelement (46) über eine hintere Teillänge der Trennanordnung (40) erstreckt und unter Längenverkürzung der Trennanordnung (40) nach vorne in die Nichtgebrauchsstellung verschiebbar ist.

2. Kraftwagen nach Anspruch 1,
**dadurch gekennzeichnet,**
**dass** das Abdeckelement eine Abdeckhaube (46) mit seitlich nach unten abgewinkelten Flügeln (48) ist.

3. Kraftwagen nach Anspruch 2,
**dadurch gekennzeichnet,**
**dass** die Flügel (48) der Abdeckhaube (46) jeweils gemeinsam mit gegenüberliegenden Wandbereichen einer Auskleidung des Heckstauraums einen Aufnahmeschacht (61) für seitliche Verdecksäulen (18) des Klappdachs bilden.

4. Kraftwagen nach Anspruch 2,
**dadurch gekennzeichnet,**
**dass** die Abdeckhaube (46) einen Übergangsbereich (54) zum hinteren Endbereich (52) aufweist, der nach unten abgewinkelt ist.

5. Kraftwagen nach Anspruch 4,
**dadurch gekennzeichnet,**
**dass** der hintere Endbereich (52) etwa horizontal verläuft und eine Griffanordnung (56) aufweist.

6. Kraftwagen nach Anspruch 5,
**dadurch gekennzeichnet,**
**dass** die Griffanordnung (56) ein ovales Griffloch umfasst, wobei die an das Griffloch angrenzende Randzone des Endbereichs mit einer Umrandung (58) versehen ist.

7. Kraftfahrzeug nach Anspruch 2,
**dadurch gekennzeichnet,**
**dass** die Abdeckhaube (46) in den hinteren Eckbereichen der Haube (46) seitlich auskragende Haltearme (66) aufweist, die in zugehörige Aufnahmekonsolen (68) einhängbar sind.

8. Kraftwagen nach Anspruch 7,
**dadurch gekennzeichnet,**
**dass** die Aufnahmekonsolen (68) jeweils mit einem Anschlagpuffer (70) für das Klappdach versehen sind.

9. Kraftwagen nach Anspruch 2,
**dadurch gekennzeichnet,**
**dass** die Abdeckhaube (46) über seitliche Parallelogrammgestänge (60) bewegungsgesteuert ist.

10. Kraftwagen nach Anspruch 1,
**dadurch gekennzeichnet,**
**dass** die Trennanordnung (40) im vorderen Längenbereich ein zweites Abdeckelement (62) aufweist.

11. Kraftwagen nach Anspruch 1,
**dadurch gekennzeichnet,**
**dass** das zweite Abdeckelement (62) aus einer faltbaren Stoffbahn besteht.

12. Kraftwagen nach Anspruch 11,
**dadurch gekennzeichnet,**
**dass** das hintere Ende des zweiten Abdeckelements (62) mit dem vorderen Ende des hinteren Abdeckelements (46) verbunden ist.

13. Kraftwagen nach Anspruch 2 und 10,
**dadurch gekennzeichnet,**
**dass** das zweite Abdeckelement (62) seitlich nach unten abgewinkelte Flügel (64) aufweist, die auf die Flügel (48) des hinteren Abdeckelements (46) abgestimmt sind.

14. Kraftwagen nach Anspruch 1,
**dadurch gekennzeichnet,**
**dass** die Trennanordnung (40) gemeinsam mit Verkleidungsteilen des Heckstauraums (25) als vormontierbare Baueinheit ausgebildet ist.

## Claims

1. Motor vehicle having a folding roof which can be opened and can be lowered into a rear storage space (25), and having partitioning of the rear storage space (25) into a folding-top space (42) and a residual luggage space (44) by means of a separating arrangement (40) which comprises a dimensionally stable covering element (46) which can be shifted vertically from a use position into a non-use position when the folding top is stored, **characterized in that** the covering element (46) extends over a rear sub-length of the separating arrangement (40) and can be displaced forwards into the non-use position shortening the length of the separating arrangement (40).

2. Motor vehicle according to Claim 1, **characterized in that** the covering element is a covering hood (46) having wings (48) angled laterally downwards.

3. Motor vehicle according to Claim 2, **characterized in that** the wings (48) of the covering hood (46) form, in each case together with opposite wall regions of a lining of the rear storage space, a receiving shaft (61) for lateral folding-top pillars (18) of the folding roof.

4. Motor vehicle according to Claim 2, **characterized in that** the covering hood (46) has a transition region (54) to the lower end region (52), which transition region is angled downwards.

5. Motor vehicle according to Claim 4, **characterized in that** the rear end region (52) has an approximately horizontal profile and has a gripping arrangement (56).

6. Motor vehicle according to Claim 5, **characterized in that** the gripping arrangement (56) comprises an oval gripping hole, that edge zone of the end region which is adjacent to the gripping hole being provided with a border (58).

7. Motor vehicle according to Claim 2, **characterized in that** the covering hood (46) has, in the rear corner regions of the hood (46), laterally protruding retaining arms (66) which can be fitted into associated receiving brackets (68).

8. Motor vehicle according to Claim 7, **characterized in that** the receiving brackets (68) are in each case provided with a stop buffer (70) for the folding roof.

9. Motor vehicle according to Claim 2, **characterized in that** the covering hood (46) is controlled in movement via lateral parallelogram linkages (60).

10. Motor vehicle according to Claim 1, **characterized in that** the separating arrangement (40) has a second covering element (62) in the front length region.

11. Motor vehicle according to Claim 1, **characterized in that** the second covering element (62) consists of a foldable web of material.

12. Motor vehicle according to Claim 11, **characterized in that** the rear end of the second covering element (62) is connected to the front end of the rear covering element (46).

13. Motor vehicle according to Claims 2 and 10, **characterized in that** the second covering element (62) has wings (64) which are angled laterally downwards and are matched to the wings (48) of the rear covering element (46).

14. Motor vehicle according to Claim 1, **characterized in that** the separating arrangement (40) is designed together with soft trim parts of the rear storage space (25) as a preassemblable constructional unit.

## Revendications

1. Véhicule automobile avec un toit ouvrant escamotable, qui peut être abaissé dans un espace de rangement situé à l'arrière du véhicule (25), et avec une subdivision de l'espace de rangement situé à l'arrière (25) en un espace de recouvrement (42) et un espace restant pour les bagages (44) grâce à une installation de séparation (40), qui comprend un élément de recouvrement de forme stable (46), lequel peut être déplacé en hauteur à partir d'une position d'utilisation avec un recouvrement enlevé dans une position de non utilisation,
**caractérisé en ce**
**que** l'élément de recouvrement (46) s'étend sur une longueur partielle arrière de l'installation de séparation (40) et peut être coulissé vers l'avant en position de non utilisation avec raccourcissement de la longueur de l'installation de séparation (40).

2. Véhicule automobile selon la revendication 1,
**caractérisé en ce**
**que** l'élément de recouvrement est un capot (46) avec des ailes (48) pliées latéralement vers le bas.

3. Véhicule automobile selon la revendication 2,
**caractérisé en ce**
**que** les ailes (48) du capot (46) forment respectivement ensemble, avec des zones de paroi opposées d'un habillage de l'espace de rangement situé à l'arrière, un espace de logement (61) pour des colonnes latérales de recouvrement (18) du toit escamotable.

4. Véhicule automobile selon la revendication 2,
**caractérisé en ce**
**que** le capot (46) présente une zone de transition (54) vers la zone terminale arrière (52), qui est pliée vers le bas.

5. Véhicule automobile selon la revendication 4,
**caractérisé en ce**
**que** la zone terminale arrière (52) s'étend à peu près horizontalement et présente une poignée (56).

6. Véhicule automobile selon la revendication 5,
**caractérisé en ce**
**que** la poignée (56) comprend un trou ovale de saisie, la zone extérieure de la zone terminale, limitant le trou de saisie, est munie d'une bordure (58) .

7. Véhicule automobile selon la revendication 2,
**caractérisé en ce**
**que** le capot (46) présente dans les zones angulaires arrière du capot (46) des bras de maintien (66) avec un col dépassant latéralement, qui peuvent être suspendus dans des consoles de logement correspondantes (68).

8. Véhicule automobile selon la revendication 7,
**caractérisé en ce**
**que** les consoles de logement (68) sont munies respectivement d'un tampon de butée (70) pour le toit escamotable.

9. Véhicule automobile selon la revendication 2,
**caractérisé en ce**
**que** le mouvement du capot (46) est commandé par des barres parallélogrammes latérales (60).

10. Véhicule automobile selon la revendication 1,
**caractérisé en ce**
**que** l'installation de séparation (40) présente dans la zone de longueur avant un second élément de recouvrement (62).

11. Véhicule automobile selon la revendication 1,
**caractérisé en ce**
**que** le second élément de recouvrement (62) se compose d'une bande d'étoffe pliable.

12. Véhicule automobile selon la revendication 11,
**caractérisé en ce**
**que** l'extrémité arrière du second élément de recouvrement (62) est reliée à l'extrémité avant de l'élément de recouvrement arrière (46).

13. Véhicule automobile selon la revendication 2 et 10,
**caractérisé en ce**
**que** le second élément de recouvrement (62) présente des ailes (64) pliées latéralement vers le bas, qui s'adaptent aux ailes (48) de l'élément de recouvrement arrière (46).

14. Véhicule automobile selon la revendication 1,
**caractérisé en ce**
**que** l'installation de séparation (40) est conçue conjointement avec des pièces d'habillage de l'espace de rangement situé à l'arrière (25) comme unité de construction pouvant être prémontée.
